# EUROPEAN PATENT APPLICATION

(11) **EP 4 633 069 A1**
(43) Date of publication of application: **15.10.2025**
(21) Application number: 23899718.3
(22) Date of filing: 15.11.2023
(51) Int. Cl.: H04L 1/00, H04W 72/04

(54) **METHOD AND APPARATUS USED IN NODE FOR WIRELESS COMMUNICATIONS**

(30) Priority: 06.12.2022 CN 202211554259
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/131679
(87) International publication number: WO 2024/120138

(57) **Abstract**

Disclosed in the present application are a method and apparatus used in a node for wireless communications. The method comprises: a node first receiving first information and second information, wherein the first information and the second information are respectively used for configuring a first search space set and a second search space set; and then monitoring a PDCCH in a first RE set according to the configuration of the first information or according to the configuration of the second information, wherein whether the PDCCH is monitored according to the configuration of the first information or according to the configuration of the second information depends on whether first signaling is received on a first time resource, the first time resource is before the first RE set, and the first signaling comprises at least one of DCI and an MAC CE. In the present application, the determination of the configuration of a search space set used when a terminal monitors a physical layer control channel in an energy conservation scenario is improved, such that the spectrum efficiency is improved, thereby improving the overall performance of a system.

## Description

### Technical Field

The present application relates to a transmission method and apparatus in a wireless communication system, in particular to a transmission solution and apparatus for control channels in wireless communication.

### Background Art

In the new research topics of 5G wireless cellular communication network system (5G-RAN) Release 18, network energy saving has been discussed as a new research topic in the access layer. Compared with the energy saving solutions on the terminal side designed in previous Release 16 and Release 17, the network energy saving involves more energy saving on the base station side. An important aspect of energy saving on the base station side is to reduce the transmission frequency of broadcast signalings and system messages to reduce the energy consumption.

### Summary of the Invention

Currently, in the topic of network energy saving, several main approaches to reduce the energy consumption on the base station side are being discussed, comprising PSS (Primary Synchronization Signal)/SSS (Secondary Synchronization Signal) not comprising PBCHs (Physical Broadcast Channels), PSS/SSS comprising partial PBCHs, and SSB (SS/PBCH Block)/SIB1 (System Information Block 1) with reduced transmission density. At the same time, the base station can enable or disable the transmission of these broadcast and system messages through a dynamic signaling to achieve the effect of reducing power consumption more flexibly. However, since the above broadcast and system messages are generally not configured through a UE (User Equipment)-specific high-level signaling and are common to a cell, and the dynamic signaling itself is triggered faster than the high-level signaling, how to reasonably apply the above resources to avoid waste is a problem that needs to be discussed.

In view of the above problems of control performance configuration and reception under the network energy saving, the present application discloses a solution. It should be noted that in the description of the present application, network energy saving is only used as a typical application scenario or example; and the present application is also applicable to other scenarios facing similar problems, such as non-network energy saving scenarios, or for different technical fields, for example, technical fields other than PDCCH reception, such as measurement reporting fields, data transmission fields and other technical fields to achieve similar technical effects. In addition, using a unified solution for different scenarios (including but not limited to, network energy saving scenarios) can also help to reduce hardware complexity and cost. In the case of no conflict, embodiments and features in the embodiments in any node of the present application can be applied to any other node. In the case of no conflict, the embodiments and features in the embodiments of the present application may be arbitrarily combined with each other. In particular, the interpretation of the terminologies, nouns, functions, and variables in the present application (if not specifically noted) can refer to the definitions in the specification protocols TS36 series, TS38 series, and TS37 series of 3GPP. If necessary, 3GPP standards TS38.211, TS38.212, TS38.213, TS38.214, TS38.215, TS38.321, TS38.331, TS38.305, and TS37.355 can be referred to for assisting in understanding the present application.

The present application discloses a method used in a first node for wireless communication, comprising:
receiving first information and second information, wherein the first information and the second information are respectively used for configuring a first search space set and a second search space set; and
monitoring a PDCCH (Physical Downlink Control Channel) in a first RE set according to the configuration of the first information or according to the configuration of the second information,
wherein, whether the PDCCH is monitored according to the configuration of the first information or according to the configuration of the second information depends on whether a first signaling is received on a first time resource; the first time resource is before the first RE (Resource Elements) set; the first signaling comprises at least one of DCI (Downlink Control Information) and MAC (Medium Access Control) CEs (Control Elements).

As one embodiment, the above method is characterized in that: a blind detection mode corresponding to the first RE set is more flexibly indicated through the first signaling, so as to more flexibly schedule and transmit the PDCCH.

According to one aspect of the present application, the above method comprises:
detecting the first signaling on the first time resource,
wherein, when the first node receives the first signaling on the first time resource, the first node monitors the PDCCH in the first RE set according to the configuration of the second information; when the first node does not receive the first signaling on the first time resource, the first node monitors the PDCCH in the first RE set according to the configuration of the first information.

According to one aspect of the present application, the first information is system information; the first signaling is common to a cell, or the first signaling is common to a UE group.

As one embodiment, the above method is characterized in that: the first information corresponds to the configuration of a search space set for initial access, and the second information corresponds to the configuration of a search space set in the connected state, thereby enriching the configuration and operation mode of the search space set.

According to one aspect of the present application, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

As one embodiment, the above method is characterized in that: the first information is for traditional UE, and the second information is for UE of Release-18 or later.

As one embodiment of the present application, the second information is an RRC (Radio Resource Control) dedicated signaling.

According to one aspect of the present application, the first information is used for indicating a plurality of time resources, and the first RE set belongs to one of the plurality of time resources in a time domain.

According to one aspect of the present application, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

According to one aspect of the present application, the above method comprises:
transmitting a first signal,
wherein, the first signal is used for indicating information of the first node, and the first signal is related to the first signaling.

As one embodiment, the above method is characterized in that: the transmitting of the first signaling is triggered by the first signal, so as to achieve more flexible configuration and application of the search space set.

The present application discloses a method used in a second node for wireless communication, comprising:
transmitting first information and second information, wherein the first information and the second information are respectively used for configuring a first search space set and a second search space set; and
transmitting a PDCCH in a first RE set according to the configuration of the first information or according to the configuration of the second information,
wherein, whether the PDCCH is transmitted according to the configuration of the first information or according to the configuration of the second information depends on whether a first signaling is transmitted on a first time resource; the first time resource is before the first RE set; the first signaling comprises at least one of DCI and an MAC CE.

According to one aspect of the present application, the above method comprises:
determining whether to transmit the first signaling on the first time resource,
wherein, a recipient of the first signaling comprises a first node; when the second node transmits the first signaling on the first time resource, the first node monitors the PDCCH in the first RE set according to the configuration of the second information; when the second node does not transmit the first signaling on the first time resource, the first node monitors the PDCCH in the first RE set according to the configuration of the first information.

According to one aspect of the present application, the first information is system information; the first signaling is common to a cell, or the first signaling is common to a UE group.

According to one aspect of the present application, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

According to one aspect of the present application, the second information is an RRC dedicated signaling.

According to one aspect of the present application, the first information is used for indicating a plurality of time resources, and the first RE set belongs to one of the plurality of time resources in a time domain.

According to one aspect of the present application, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

According to one aspect of the present application, the above method comprises:
receiving a first signal,
wherein, a sender of the first signal is a first node, the first signal is used for indicating information of the first node, and the first signal is related to the first signaling.

The present application discloses a first node for wireless communication, comprising:
a first receiver, receiving first information and second information, wherein the first information and the second information are respectively used for configuring a first search space set and a second search space set; and monitoring a PDCCH in a first RE set according to the configuration of the first information or according to the configuration of the second information,
wherein, whether the PDCCH is monitored according to the configuration of the first information or according to the configuration of the second information depends on whether a first signaling is received on a first time resource; the first time resource is before the first RE set; the first signaling comprises at least one of DCI and an MAC CE.

The present application discloses a second node for wireless communication, comprising:
a second transmitter, transmitting first information and second information, wherein the first information and the second information are respectively used for configuring a first search space set and a second search space set; and transmitting a PDCCH in a first RE set according to the configuration of the first information or according to the configuration of the second information,
wherein, whether the PDCCH is transmitted according to the configuration of the first information or according to the configuration of the second information depends on whether a first signaling is transmitted on a first time resource; the first time resource is before the first RE set; the first signaling comprises at least one of DCI and an MAC CE.

As one embodiment, the solution in the present application has the following benefit: the configuration and use mode of the search space set in the network energy saving scenario is optimized, so as to improve the spectrum efficiency and avoid resource waste.

### Brief Description of the Drawings

Other features, purposes and advantages of the present application will become more apparent from reading the detailed description of the non-limiting embodiments made with reference to the following drawings:
FIG. 1 shows a processing flowchart of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of first information and second information according to one embodiment of the present application;
FIG. 6 shows a flowchart of first information and second information according to another embodiment of the present application;
FIG. 7 shows a flowchart of a first signal according to one embodiment of the present application;
FIG. 8 shows a schematic diagram of a first RE set according to one embodiment of the present application;
FIG. 9 shows a structural block diagram of a processing apparatus in a first node device according to one embodiment of the present application;
FIG. 10 shows a structural block diagram of a processing apparatus in a second node device according to one embodiment of the present application.

### Detailed Description of Embodiments

The technical solution of the present application will be further described in detail below in conjunction with the drawings. It should be noted that, in the case of no conflict, embodiments and the features in the embodiments of the present application can be arbitrarily combined with each other.

### Embodiment 1

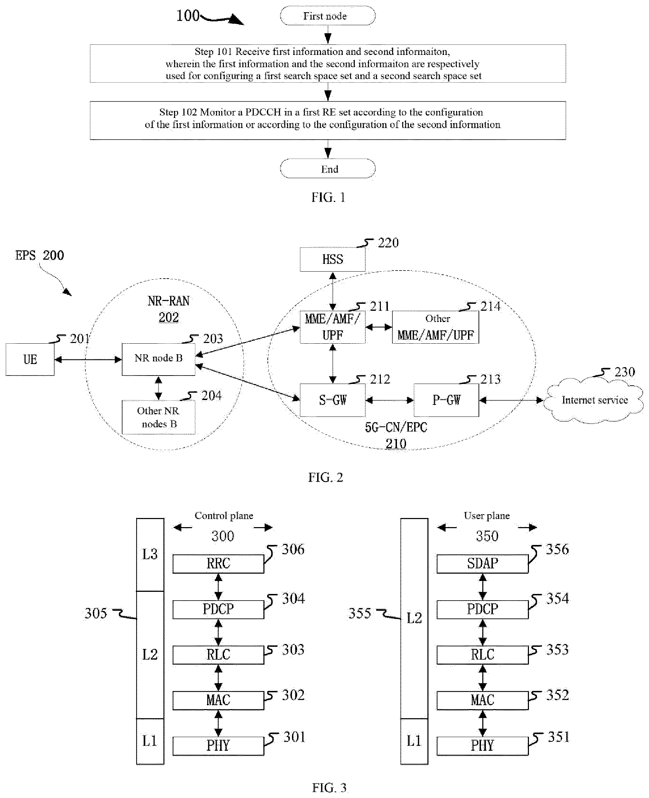

Embodiment 1 illustrates one processing flowchart of a first node, as shown in FIG. 1. In 100 shown in FIG. 1, each box represents one step. In Embodiment 1, the first node in the present application receives first information and second information in step 101, wherein the first information and the second information are respectively used for configuring a first search space set and a second search space set; and monitors a PDCCH in a first RE set according to the configuration of the first information or according to the configuration of the second information in step 102.

In Embodiment 1, whether the PDCCH is monitored according to the configuration of the first information or according to the configuration of the second information depends on whether a first signaling is received on a first time resource; the first time resource is before the first RE set; the first signaling comprises at least one of DCI and an MAC CE.

As one embodiment, the first information comprises an MIB (Master Information Block).

As one embodiment, the first information comprises an SIB (System Information Block).

As one embodiment, the first information comprises an SSB.

As one embodiment, the first information comprises a synchronization signal.

As one embodiment, the first information is transmitted through an RRC signaling.

As one embodiment, the first information comprises a PDCCH-ConfigSIB1 IE (Information Element) in TS 38.331.

As one embodiment, the name of the RRC signaling carrying the first information comprises a PDCCH.

As one embodiment, the name of the RRC signaling carrying the first information comprises a Config.

As one embodiment, the name of the RRC signaling carrying the first information comprises an SIB.

As one embodiment, the first information is used for determining a time domain resource corresponding to the first search space set.

As one embodiment, the first information is used for determining a frequency domain resource corresponding to the first search space set.

As one embodiment, the first information is used for determining a CORESET (Control Resource Set) associated with the first search space set.

As one embodiment, the first information is used for determining a PDCCH Monitoring Occasion corresponding to the first search space set.

As one embodiment, the first information is common to a cell.

As one embodiment, the first information is broadcast.

As one embodiment, the second information is transmitted through an RRC signaling.

As one embodiment, the second information comprises a Searchspace IE in TS 38.331.

As one embodiment, the name of the RRC signaling carrying the second information comprises a Searchspace.

As one embodiment, the name of the RRC signaling carrying the second information comprises R-18.

As one embodiment, the name of the RRC signaling carrying the second information comprises Energy.

As one embodiment, the name of the RRC signaling carrying the second information comprises Saving.

As one embodiment, the second information is UE-specific.

As one embodiment, the second information is unicast.

As one embodiment, the second information is used for determining a time domain resource corresponding to the second search space set.

As one embodiment, the second information is used for determining a frequency domain resource corresponding to the second search space set.

As one embodiment, the second information is used for determining a CORESET associated with the second search space set.

As one embodiment, the first RE set comprises a positive integer number of REs greater than 1.

As one embodiment, the first RE set is an RE set consisting of all REs occupied by a CORESET corresponding to one search space set in one slot.

As one embodiment, the first RE set is an RE set consisting of all REs occupied by a CORESET corresponding to one search space set in one subframe.

As one embodiment, when the first node receives the first signaling on the first time resource, the first node monitors the PDCCH in the first RE set according to the configuration of the second information; when the first node does not receive the first signaling on the first time resource, the first node monitors the PDCCH in the first RE set according to the configuration of the first information.

As one embodiment, the first time resource is configured through an RRC signaling.

As one embodiment, the first time resource is triggered through a WUS (Wake-up Signal).

As one embodiment, the first time resource is pre-defined.

As one embodiment, the first time resource comprises one or more slots.

As one embodiment, the first time resource comprises one or more multi-carrier symbols.

As one embodiment, the first search space set and the second search space set each comprise one CSS (Common Search Space) set and one USS (UE-Specific Search Space) set.

As one embodiment, the first search space set and the second search space set each comprise one CSS and one USS.

As one embodiment, the first time resource is before the nth slot before the first RE set, and n is a positive integer.

As one embodiment, n is fixed.

As one embodiment, n is configurable.

As one embodiment, the first signaling indicates the second information from K1 candidate information, and K1 is a positive integer greater than 1.

As one sub-embodiment of this embodiment, the K1 candidate information corresponds to K1 search space set configurations.

As one sub-embodiment of this embodiment, the K1 candidate information corresponds to K1 Searchspace IEs.

As one embodiment, the first time resource is before a time domain resource occupied by the first RE set.

### Embodiment 2

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise a piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, however, those skilled in the art will readily appreciate that the various concepts presented throughout the present application may be extended to networks providing circuit switching services or other cellular networks. The NR-RAN comprises an NR Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MMEs/AMFs/UPFs 214, an S-GW (Service Gateway) 212, and a P-GW (Packet Date Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node in the present application.

As one embodiment, the UE201 supports Energy Saving.

As one embodiment, the UE201 supports dynamic triggering of the base station to enter an energy saving mode.

As one embodiment, the NR node B corresponds to the second node in the present application.

As one embodiment, the NR node B supports Energy Saving.

As one embodiment, the NR node B supports dynamic entry into an energy saving mode.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

### Embodiment 3

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB or an RSU in V2X) and a second communication node device (a gNB, UE or an RSU in V2X) using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and is responsible for the link between the first communication node device and the second communication node device through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and the PDCP sublayer 304 also provides inter-cell mobility support of the first communication node device to the second communication node device. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first information is generated at the RRC306.

As one embodiment, the second information is generated at the RRC306.

As one embodiment, the first information is generated at the MAC302 or MAC352.

As one embodiment, the second information is generated at the MAC302 or MAC352.

As one embodiment, the first signaling is generated at the MAC302 or MAC352.

As one embodiment, the first signaling is generated at the PHY301 or the PHY351.

As one embodiment, the first signal is generated at the MAC302 or MAC352.

As one embodiment, the first signal is generated at the RRC306.

As one embodiment, the first signal is generated at the PHY301 or the PHY351.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

### Embodiment 4

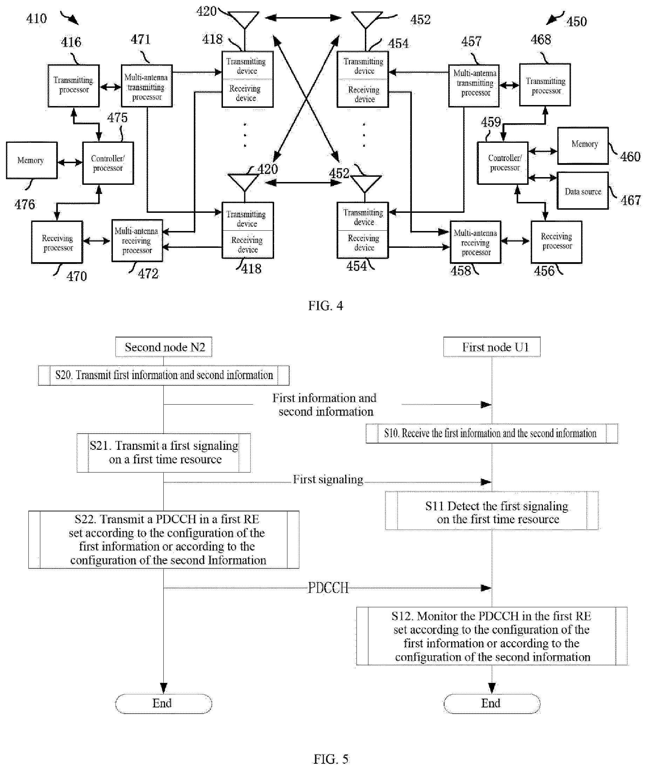

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 apparatus comprises: at least one processor and at least one memory, wherein the at least one memory comprises a computer program code; the at least one memory and the computer program code are configured to be used together with the at least one processor; the first communication device 450 apparatus at least: first receives first information and second information, wherein the first information and the second information are respectively used for configuring a first search space set and a second search space set; and then monitors a PDCCH in a first RE set according to the configuration of the first information or according to the configuration of the second information, wherein whether the PDCCH is monitored according to the configuration of the first information or according to the configuration of the second information depends on whether a first signaling is received on a first time resource; the first time resource is before the first RE set; the first signaling comprises at least one of DCI and an MAC CE.

As one embodiment, the first communication device 450 comprises: a memory storing a computer-readable instruction program, wherein the computer-readable instruction program generates actions when executed by at least one processor, and the actions comprise: first receiving first information and second information, wherein the first information and the second information are respectively used for configuring a first search space set and a second search space set; and then monitoring a PDCCH in a first RE set according to the configuration of the first information or according to the configuration of the second information, wherein whether the PDCCH is monitored according to the configuration of the first information or according to the configuration of the second information depends on whether a first signaling is received on a first time resource; the first time resource is before the first RE set; the first signaling comprises at least one of DCI and an MAC CE.

As one embodiment, the second communication device 410 apparatus comprises: at least one processor and at least one memory, wherein the at least one memory comprises the computer program code; the at least one memory and the computer program code are configured to be used together with the at least one processor. The second communication device 410 apparatus at least: first transmits first information and second information, wherein the first information and the second information are respectively used for configuring a first search space set and a second search space set; and then transmits a PDCCH in a first RE set according to the configuration of the first information or according to the configuration of the second information, wherein whether the PDCCH is transmitted according to the configuration of the first information or according to the configuration of the second information depends on whether a first signaling is transmitted on a first time resource; the first time resource is before the first RE set; the first signaling comprises at least one of DCI and an MAC CE.

As one embodiment, the second communication device 410 apparatus comprises: a memory storing a computer-readable instruction program, wherein the computer-readable instruction program generates actions when executed by at least one processor, and the actions comprise: first transmitting first information and second information, wherein the first information and the second information are respectively used for configuring a first search space set and a second search space set; and then transmitting a PDCCH in a first RE set according to the configuration of the first information or according to the configuration of the second information, wherein whether the PDCCH is transmitted according to the configuration of the first information or according to the configuration of the second information depends on whether a first signaling is transmitted on a first time resource; the first time resource is before the first RE set; the first signaling comprises at least one of DCI and an MAC CE.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one servicing cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving first information and second information; at least the first four of the antenna 420, the transmitting device 418, the multi-antenna transmitting processor 471, the transmitting processor 416, and the controller/processor 475 are used for transmitting the first information and the second information.

As one embodiment, at least the first four of the antenna 452, the receiving device 454, the multi-antenna receiving processor 458, the receiving processor 456, and the controller/processor 459 are used for monitoring a PDCCH in a first RE set according to the configuration of the first information or according to the configuration of the second information; at least the first four of the antenna 420, the transmitting device 418, the multi-antenna transmitting processor 471, the transmitting processor 416, and the controller/processor 475 are used for transmitting the PDCCH in the first RE set according to the configuration of the first information or according to the configuration of the second information.

As one embodiment, at least the first four of the antenna 452, the receiving device 454, the multi-antenna receiving processor 458, the receiving processor 456, and the controller/processor 459 are used for receiving the first signaling on the first time source; at least the first four of the antenna 420, the transmitting device 418, the multi-antenna transmitting processor 471, the transmitting processor 416, and the controller/processor 475 are used for transmitting the first signaling on the first time resource.

As one embodiment, at least the first four of the antenna 452, the transmitting device 454, the multi-antenna transmitting processor 457, the transmitting processor 468, and the controller/processor 459 are used for transmitting a first signal; at least the first four of the antenna 420, the receiving device 418, the multi-antenna receiving processor 472, the receiving processor 470, and the controller/processor 475 are used for receiving the first signal.

### Embodiment 5

Embodiment 5 illustrates one flowchart of first information and second information, as shown in FIG. 5. In FIG. 5, a first node U1 communicates with a second node N2 via a radio link. It should be particularly noted that the order in this embodiment does not limit the signal transmission order and implementation order in the present application. In the case of no conflict, embodiments, sub-embodiments and subsidiary embodiments in Embodiment 5 can be applied to Embodiment 6 or 7; conversely, in the case of no conflict, any embodiment, sub-embodiment and subsidiary embodiment in Embodiment 6 or 7 can be applied to Embodiment 5.

For **the first node U1,** in step S10,the first information and the second information are received; in step S11, a first signaling is detected on a first time resource; in step S12, a PDCCH is monitored in a first RE set according to the configuration of the first information or according to the configuration of the second information.

For **the second node N2,** in step S20,the first information and the second information are transmitted; in step S21, the first signaling is transmitted on the first time resource; in step S22, the PDCCH is transmitted in the first RE set according to the configuration of the first information or according to the configuration of the second information.

In Embodiment 5, the first information and the second information are respectively used for configuring a first search space set and a second search space set; the first node receives a first signaling on a first time resource according to the configuration of the first information or according to the configuration of the second information; the first time resource is before the first RE set; the first signaling comprises at least one of DCI and an MAC CE; the first node receives the first signaling on the first time resource, and the first node monitors the PDCCH in the first RE set according to the configuration of the second information.

Typically, the step S21 comprises: the second node determines to transmit the first signaling on the first time resource.

Typically, the step S22 comprises: the second node transmits the PDCCH in the first RE set according to the configuration of the second information.

Typically, the first information is system information; the first signaling is common to a cell, or the first signaling is common to a UE group.

As one embodiment, the system information comprises an MIB.

As one embodiment, the system information comprises an SIB.

As one embodiment, the UE group comprises a plurality of pieces of UE.

As one embodiment, the UE group comprises the first node.

As one embodiment, the UE group comprises all UE that supports Energy Saving.

As one embodiment, the UE group comprises UE supporting Release-18.

Typically, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

As one embodiment, the second information is system information recorded in a protocol after 3GPP Release-17.

As one embodiment, the second information is system information recorded in a 3GPP Release-18 protocol.

Typically, the second information is an RRC dedicated signaling.

Typically, the first information is used for indicating a plurality of time resources, and the first RE set belongs to one of the plurality of time resources in a time domain.

As one embodiment, the plurality of time resource indicated by the first information is discontinuous in the time domain.

As one embodiment, the plurality of time resources indicated by the first information are discrete in the time domain.

As one embodiment, at least two of the plurality of time resources indicated by the first information are discontinuous in the time domain.

As one embodiment, the plurality of time resources indicated by the first information are respectively a plurality of PDCCH Monitoring Occasions.

As one embodiment, the plurality of time resources indicated by the first information are respectively a plurality of slots.

Typically, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

As one embodiment, the first-type RNTI comprises the C-RNTI.

As one embodiment, the second-type RNTI comprises only the C-RNTI.

As one embodiment, the first-type RNTI comprises Q1 types of RNTIs, and the second-type RNTI comprises Q2 types of RNTIs, wherein Q1 is a positive integer, and Q2 is a positive integer; at least one of the Q1 types of RNTIs is different from any of the Q2 types of RNTIs.

As one sub-embodiment of this embodiment, Q1 is a positive integer greater than 1.

As one sub-embodiment of this embodiment, Q2 is a positive integer greater than 1.

### Embodiment 6

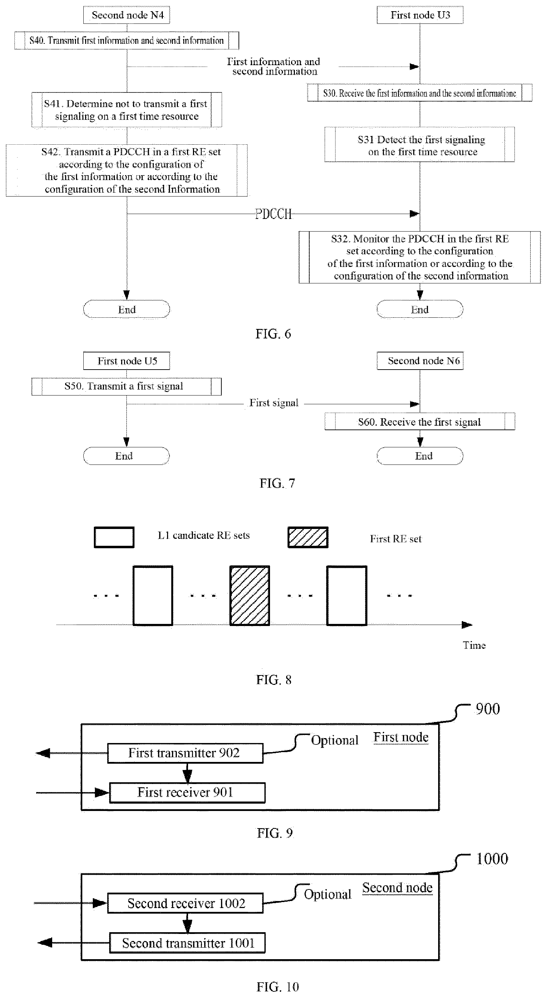

Embodiment 6 illustrates another flowchart of first information and second information, as shown in FIG. 6. In FIG. 6, a first node U3 communicates with a second node N4 via a radio link. It should be particularly noted that the order in this embodiment does not limit the signal transmission order and implementation order in the present application. In the case of no conflict, embodiments, sub-embodiments and subsidiary embodiments in Embodiment 6 can be applied to Embodiment 5 or 7; conversely, in the case of no conflict, any embodiment, sub-embodiment and subsidiary embodiment in Embodiment 5 or 7 can be applied to Embodiment 6.

For **the first node U3,** in step S30,the first information and the second information are received; in step S31, a first signaling is detected on a first time resource; in step S32, a PDCCH is monitored in a first RE set according to the configuration of the first information or according to the configuration of the second information.

For **the second node N4,** in step S40, the first information and the second information are transmitted; in step S41, the first signaling is determined to be not transmitted on the first time resource; in step S42, the PDCCH is transmitted in the first RE set according to the configuration of the first information or according to the configuration of the second information.

In Embodiment 6, the first information and the second information are respectively used for configuring a first search space set and a second search space set; the first node receives a first signaling on a first time resource according to the configuration of the first information or according to the configuration of the second information; the first time resource is before the first RE set; the first signaling comprises at least one of DCI and an MAC CE; the first node does not receive the first signaling on the first time resource, and the first node monitors the PDCCH in the first RE set according to the configuration of the first information.

Typically, the step S41 comprises: the second node does not transmit the first signaling on the first time resource.

Typically, the step S42 comprises: the second node transmits the PDCCH in the first RE set according to the configuration of the first information.

Typically, the first information is system information; the first signaling is common to a cell, or the first signaling is common to a UE group.

Typically, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

Typically, the first information is used for indicating a plurality of time resources, and the first RE set belongs to one of the plurality of time resources in a time domain.

Typically, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

### Embodiment 7

Embodiment 7 illustrates one flowchart of a first signal, as shown in FIG. 7. In FIG. 7, a first node U5 communicates with a second node N6 via a radio link. It should be particularly noted that the order in this embodiment does not limit the signal transmission order and implementation order in the present application. In the case of no conflict, embodiments, sub-embodiments and subsidiary embodiments in Embodiment 7 can be applied to Embodiment 5 or 6; conversely, in the case of no conflict, any embodiment, sub-embodiment and subsidiary embodiment in Embodiment 5 or 6 can be applied to Embodiment 7.

For **the first node U5,** in step S50, the first signal is transmitted.

For **the second node N6,** in step S60, the first signal is received.

In Embodiment 7, the first signal is used for indicating information of a first node, and the first signal is related to a first signaling.

As one embodiment, the first signal is used for triggering the transmitting of the first signaling.

As one embodiment, the first signal is used for triggering the monitoring of the first signaling.

As one embodiment, the first signal is used for triggering the reception of the first signaling.

As one embodiment, the first signal is used for indicating a Capability of the first node.

As one embodiment, the first signal is used for indicating a Category of the first node.

As one embodiment, the first signal is used for indicating an Access Category corresponding to the first node.

As one embodiment, the first signal is used for indicating that the first node supports an energy saving mode.

As one embodiment, the first signal is used for indicating a Release Number supported by the first node.

As one embodiment, the first signal comprises a UECapabilityInformation message in TS 38.331.

As one embodiment, the first signaling is used for indicating that the sender of the first signaling enters the energy saving mode.

As one embodiment, the first signaling is used for determining that a priority of a first search space set is lower than that of a second search space set.

As one embodiment, the step S50 is located after step S10 and before step S11 in Embodiment 5.

As one embodiment, the step S50 is located before step S10 in Embodiment 5.

As one embodiment, the step S50 is located after step S30 and before step S31 in Embodiment 5.

As one embodiment, the step S50 is located before step S30 in Embodiment 5.

As one embodiment, the step S60 is located after step S20 and before step S21 in Embodiment 5.

As one embodiment, the step S60 is located before step S20 in Embodiment 5.

As one embodiment, the step S60 is located after step S40 and before step S41 in Embodiment 5.

As one embodiment, the step S60 is located before step S40 in Embodiment 5.

### Embodiment 8

Embodiment 8 illustrates one schematic diagram of a first RE set, as shown in FIG. 8. In FIG. 8, the first RE set is one of L1 candidate RE sets, and L1 is a positive integer greater than 1.

As one embodiment, a first search space set corresponding to the L1 candidate RE sets.

As one embodiment, a second search space set corresponds to the L1 candidate RE sets.

As one embodiment, the first search space set and the second search space set jointly correspond to the L1 candidate RE sets.

As one embodiment, time-frequency resources occupied by any candidate RE set in the L1 candidate RE sets in one slot correspond to time-frequency resources occupied by one CORESET.

As one embodiment, the L1 candidate RE sets respectively correspond to the time-frequency resources occupied by L1 CORESETs in L1 slots.

### Embodiment 9

Embodiment 9 illustrates one structural block diagram in a first node, as shown in FIG. 9. In FIG. 9, a first node 900 comprises a first receiver 901.

The first receiver 901,receives first information and second information, wherein the first information and the second information are respectively used for configuring a first search space set and a second search space set; and monitors a PDCCH in a first RE set according to the configuration of the first information or according to the configuration of the second information,
wherein in Embodiment 9, whether the PDCCH is monitored according to the configuration of the first information or according to the configuration of the second information depends on whether a first signaling is received on a first time resource; the first time resource is before the first RE set; the first signaling comprises at least one of DCI and an MAC CE.

As one embodiment, the first node comprises:
the first receiver 901, detecting the first signaling on the first time resource,
wherein, when the first node receives the first signaling on the first time resource, the first node monitors the PDCCH in the first RE set according to the configuration of the second information; when the first node does not receive the first signaling on the first time resource, the first node monitors the PDCCH in the first RE set according to the configuration of the first information.

As one embodiment, the first information is system information; the first signaling is common to a cell, or the first signaling is common to a UE group.

As one embodiment, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

As one embodiment, the second information comprises an RRC (Radio Resource Control)dedicated signaling.

As one embodiment, the first information is used for indicating a plurality of time resources, and the first RE set belongs to one of the plurality of time resources in a time domain.

As one embodiment, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

As one embodiment, the first node comprises:
a first transmitter 902, transmitting a first signal,
wherein, the first signal is used for indicating information of the first node, and the first signal is related to the first signaling.

As one embodiment, the first transmitter 902 is optional.

As one embodiment, the first receiver 901 comprises at least the first four of an antenna 452, a receiving device 454, a multi-antenna receiving processor 458, a receiving processor 456, and a controller/processor 459 in Embodiment 4.

As one embodiment, the first transmitter 902 comprises at least the first four of the antenna 452, a transmitting device 454, a multi-antenna transmitting processor 457, a transmitting processor 468, and the controller/processor 459 in Embodiment 4.

### Embodiment 10

Embodiment 10 illustrates one structural block diagram in a second node, as shown in FIG. 10. In FIG. 10, a second node 1000 comprises a second transmitter 1001.

The second transmitter 1001,transmits first information and second information, wherein the first information and the second information are respectively used for configuring a first search space set and a second search space set; and
transmits a PDCCH in a first RE set according to the configuration of the first information or according to the configuration of the second information,
wherein in Embodiment 10, whether the PDCCH is transmitted according to the configuration of the first information or according to the configuration of the second information depends on whether a first signaling is transmitted on a first time resource; the first time resource is before the first RE set; the first signaling comprises at least one of DCI and an MAC CE.

As one embodiment, the second node comprises:
the first transmitter 1001, determining whether to transmit the first signaling on the first time resource,
wherein, a recipient of the first signaling comprises a first node; when the second node transmits the first signaling on the first time resource, the first node monitors the PDCCH in the first RE set according to the configuration of the second information; when the second node does not transmit the first signaling on the first time resource, the first node monitors the PDCCH in the first RE set according to the configuration of the first information.

As one embodiment, the first information is system information; the first signaling is common to a cell, or the first signaling is common to a UE group.

As one embodiment, only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

As one embodiment, the second information comprises an RRC (Radio Resource Control)dedicated signaling.

As one embodiment, the first information is used for indicating a plurality of time resources, and the first RE set belongs to one of the plurality of time resources in a time domain.

As one embodiment, a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; the first-type RNTI comprises an SI-RNTI, and the second-type RNTI comprises a C-RNTI.

As one embodiment, the second node comprises:
a second receiver 1002, receiving a first signal,
wherein a sender of the first signal is the first node, the first signal is used for indicating information of the first node, and the first signal is related to the first signaling.

As one embodiment, the second receiver 1002 is optional.

As one embodiment, the second transmitter 1001 comprises at least the first four of an antenna 420, a transmitting device 418, a multi-antenna transmitting processor 471, a transmitting processor 414, and a controller/processor 475 in Embodiment 4.

As one embodiment, the second receiver 1002 comprises at least the first four of the antenna 420, a receiving device 418, a multi-antenna receiving processor 472, a receiving processor 470, and the controller/processor 475 in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The first node in the present application includes, but is not limited to, mobile phones, tablet computers, laptops, network cards, low-power devices, eMTC devices, NB-IoT devices, vehicle-mounted communication devices, transportation tools, vehicles, RSUs (Road Side Units), aircrafts, airplanes, drones, remote-controlled airplanes and other wireless communication devices. The second node in the present application includes, but is not limited to, macrocellular base stations, microcellular base stations, small cell base stations, Femtocells, relay base stations, eNBs, gNBs, transmitter receiver points (TRPs), GNSSs (Global Navigation Satellite Systems), relay satellites, satellite base stations, air base stations, RSUs, drones, test devices, transceiving apparatuses or signaling testers that simulate some functions of base stations, and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node for wireless communication, comprising:
a first receiver, receiving first information and second information, wherein the first information and the second information are respectively used for configuring a first search space set and a second search space set; and monitoring a PDCCH in a first RE set according to the configuration of the first information or according to the configuration of the second information,
wherein whether the PDCCH is monitored according to the configuration of the first information or according to the configuration of the second information depends on whether a first signaling is received on a first time resource; the first time resource is before the first RE set; and the first signaling comprises at least one of DCI and an MAC CE.

2. The first node according to claim 1, wherein the first information is system information; and the first signaling is common to a cell, or the first signaling is common to a UE group.

3. The first node according to claim 1 or 2, wherein only the first information of the first information and the second information is valid system information; the valid system information is system information of NR (New Radio), or the valid system information is system information of NR recorded in 3GPP Release 15, or the valid system information is system information of NR recorded in 3GPP Release 16, or a valid SIB1 is system information of NR recorded in 3GPP Release 17.

4. The first node according to any one of claims 1 to 3, wherein the second information is an RRC dedicated (Dedicated) signaling.

5. The first node according to any one of claims 1 to 4, wherein the first information is used for indicating a plurality of time resources, and the first RE set belongs to one of the plurality of time resources in a time domain.

6. The first node according to any one of claims 1 to 5, wherein a CRC comprised in the PDCCH transmitted in the first search space set is scrambled by a first-type RNTI, a CRC comprised in the PDCCH transmitted in the second search space set is scrambled by a second-type RNTI, and the first-type RNTI is different from the second-type RNTI; and the first-type RNTI comprises an SI-RNTI, and the second-type RNTI comprises a C-RNTI.

7. The first node according to any one of claims 1 to 6, comprising:
a first transmitter, transmitting a first signal,
wherein the first signal is used for indicating information of the first node, and the first signal is related to the first signaling.

8. A second node for wireless communication, comprising:
a second transmitter, transmitting first information and second information, wherein the first information and the second information are respectively used for configuring a first search space set and a second search space set; and transmitting a PDCCH in a first RE set according to the configuration of the first information or according to the configuration of the second information,
wherein whether the PDCCH is transmitted according to the configuration of the first information or according to the configuration of the second information depends on whether a first signaling is transmitted on a first time resource; the first time resource is before the first RE set; and the first signaling comprises at least one of DCI and an MAC CE.

9. A method used in a first node for wireless communication, comprising:
receiving first information and second information, wherein the first information and the second information are respectively used for configuring a first search space set and a second search space set; and
monitoring a PDCCH in a first RE set according to the configuration of the first information or according to the configuration of the second information,
wherein whether the PDCCH is monitored according to the configuration of the first information or according to the configuration of the second information depends on whether a first signaling is received on a first time resource; the first time resource is before the first RE set; and the first signaling comprises at least one of DCI and an MAC CE.

10. A method used in a second node for wireless communication, comprising:
transmitting first information and second information, wherein the first information and the second information are respectively used for configuring a first search space set and a second search space set; and
transmitting a PDCCH in a first RE set according to the configuration of the first information or according to the configuration of the second information,
wherein whether the PDCCH is transmitted according to the configuration of the first information or according to the configuration of the second information depends on whether a first signaling is transmitted on a first time resource; the first time resource is before the first RE set; and the first signaling comprises at least one of DCI and an MAC CE.
